# EUROPÄISCHE PATENTSCHRIFT

(11) **EP 2 895 760 B1**
(45) Veröffentlichungstag und Bekanntmachung des Hinweises auf die Patenterteilung: **10.07.2019**
(21) Anmeldenummer: 13762139.7
(22) Anmeldetag: 16.09.2013
(51) Int. Cl.: F16D 55/2255, F16D 65/18

(54) **PNEUMATISCH ODER ELEKTROMECHANISCH BETÄTIGBARE SCHEIBENBREMSE**
PNEUMATICALLY OR ELECTROMECHANICALLY ACTUATED DISK BRAKE
FREIN À DISQUE À COMMANDE PNEUMATIQUE OU ÉLECTROMÉCANIQUE

(30) Priorität: 17.09.2012 DE 102012108670
(43) Veröffentlichungstag der Anmeldung: 22.07.2015
(73) Patentinhaber: KNORR-BREMSE Systeme für Nutzfahrzeuge GmbH, 80809 München (DE)
(72) Erfinder: ASEN, Alexander, 94428 Eichendorf (DE); BRANDL, Christian, 94447 Plattling (DE); KLINGNER, Matthias, 82272 Moorenweis (DE); PESCHEL, Michael, 82296 Schöngeising (DE); RGUICHI, Abdelaziz, 82140 Olching (DE); STÖGER, Christian, 94474 Vilshofen (DE)
(86) Internationale Anmeldenummer: PCT/EP2013/069118
(87) Internationale Veröffentlichungsnummer: WO 2014/041155

(56) Entgegenhaltungen:
- EP-A1- 1 944 522
- WO-A1-96/34216
- DE-A1- 10 260 597
- DE-A1-102009 023 416
- DE-B3-102006 033 254
- DE-U1-202007 005 313
- US-A- 5 664 646
- US-A- 5 819 884
- US-A1- 2002 014 376
- US-B1- 6 354 407

## Beschreibung

Die Erfindung betrifft eine pneumatisch oder elektromechanisch betätigbare Scheibenbremse nach dem Oberbegriff des Anspruchs 1.

Derartige Scheibenbremsen sind hinlänglich bekannt. Beispielhaft sei die DE 94 22 342 U1 genannt, in der eine gattungsgemäße Scheibenbremse geoffenbart ist, bei der ein Drehhebel auf eine Brücke einwirkt, in der zwei parallel und abständig zueinander angeordnete Druckstempel gelagert sind, die jeweils ein Druckstück aufweisen.

Bei einer Bremsung wird ein an den Druckstücken anliegender Bremsbelag an eine Bremsscheibe gedrückt, wobei hierzu der Bremshebel mittels eines pneumatisch oder elektromechanisch betätigbaren Stößels verschwenkt wird, so dass über den angeschlossenen, am Bremssattel sich abstützenden Exzenter die Brücke mit den Druckstempeln in Richtung der Bremsscheibe verschoben wird.

Zur Verschiebesicherung des Bremshebels ist dieser seitlich abgestützt, wozu in die zugeordnete Wandung des Bremssattels eine Nut eingebracht ist, deren Seitenbegrenzungen Stützflächen für den Bremshebel bilden.

Diese Nut wird durch eine spanende Bearbeitung mithilfe eines Scheibenfräsers hergestellt, der durch eine seitliche Bearbeitungsöffnung im Bremssattel eingeführt wird, ebenso wie ein Fräser zur Bearbeitung von Lagerstellen an der Bremssattelwandung zur Aufnahme von Wälzkörpern, an denen Exzenterabschnitte des Bremshebels anliegen.

Um ausreichend große Stützflächen für den Bremshebel zu erhalten, ist ein im Durchmesser entsprechend großer Scheibenfräser einzuführen, was einen daran angepassten relativ großen Durchmesser der Bearbeitungsöffnung bedingt.

Allerdings ergibt sich daraus in nachteiliger Weise eine geringere Biegesteifigkeit des Bremssattels, die bei Beanspruchung, also bei einer Bremsung, zu einer unter Umständen die Funktions- und Betriebssicherheit der Scheibenbremse insgesamt beeinträchtigenden Verformung führt.

Zwar ist schon durch diverse Maßnahmen versucht worden, die Biegesteifigkeit bei gleichbleibendem Durchmesser der Bearbeitungsöffnung zu erhöhen, jedoch sind diese Maßnahmen, wenn sie denn im gewünschten Umfang erfolgreich sind, nur mit einem erheblichen konstruktiven und fertigungstechnischen Aufwand zu realisieren.

Der Erfindung liegt die Aufgabe zugrunde, eine Scheibenbremse der gattungsgemäßen Art so weiterzuentwickeln, dass ihre Betriebssicherheit mit geringem fertigungstechnischen Aufwand verbessert wird.

Aus der DE 102 60 597 A1 ist eine Scheibenbremse bekannt, bei der Funktionsteile einer Zuspanneinrichtung durch einen Stab zusammengehalten werden, der zum einen der Rückholung eines Bremsstempels dient und der zum anderen eine Montagehilfe bildet. Dieser Stab ist durch einen Schlitz des Bremshebels geführt sowie durch eine bremssattelseitige und brückenseitige Lagerung.

Die DE 20 2007 005 313 U1 offenbart eine Scheibenbremse, bei der als bremssattelseitige Lagerung Lagerböcke vorgesehen sind, in denen ein durch den Bremshebel geführtes Segmentlager sowie eine Rolle gelagert sind. Durch eine Montageklammer werden die Lagerböcke sowie die Zuspanneinrichtung, enthaltend den Bremshebel, gehalten.

Weitere Scheibenbremsen, bei denen der Bremshebel bremssattelseitig gelagert ist, sind aus der US 6 354 407 B1, der WO 96/34216 A1, der US 5 819 884 A, der US 5 664 646 A sowie der DE 10 2009 023 416 A1 bekannt.

Diese Aufgabe wird durch eine Scheibenbremse mit den Merkmalen des Anspruchs 1 gelöst.

Auf eine Bearbeitung des Bremssattels im Bereich der Lagerung des Bremshebels zur Ausbildung von Stützflächen kann durch die Erfindung verzichtet werden, wodurch sich fertigungstechnische sowie produkttechnische Vorteile ergeben.

Bei entsprechender Konfiguration der Stützelemente ist deren Ein- bzw. Anbringung wesentlich einfacher als bisher, so dass sich durchaus bemerkenswerte Kostenvorteile hinsichtlich der Herstellung der Scheibenbremse, insbesondere des Bremssattels ergeben.

Die Bearbeitungsöffnung kann nun wesentlich kleiner gehalten sein, da sie lediglich einen Durchlass für ein spanendes Werkzeug, beispielsweise einen Fräser, bilden muss, mit dem die Lagerung am Bremssattel bearbeitbar ist.

Wenn die Lagerung aus einer Lagerwelle besteht, die einerseits am Bremssattel und andererseits am Bremshebel anliegt, ist eine besonders kleinflächige Bearbeitung des Bremssattels möglich, wobei die Wälzlager dann an der Brücke anliegen.

Durch das nunmehr ausschließlich am Abmaß der zu bearbeitenden Lagerstelle dimensionierte spanende Werkzeug kann die Bearbeitungsöffnung im Verhältnis zu dem bisherigen Erfordernis wesentlich kleiner gehalten werden.

Damit erhöht sich die Biegesteifigkeit des Bremssattels und in der Folge die Belastbarkeit, so dass es nicht mehr oder nur in einem sehr geringen, vernachlässigbaren Maß zu Verformungen kommt. Dementsprechend sind Einflüsse auf die Funktions- und Betriebssicherheit der Scheibenbremse quasi ausgeschlossen.

Das oder die Stützelemente können in unterschiedlichster Konfiguration und Anordnung vorliegen. So können sie beispielsweise mit dem Hebelarm des Bremshebels korrespondieren, stattdessen aber auch seitlich an der Lagerung, wobei sie dann an den Stirnseiten der Exzenterabschnitte anliegen, die die Länge des Bremshebels in diesem Bereich begrenzen.

Hierzu können an den Bremssattel, der üblicherweise aus Gusseisen besteht, Höcker angeformt sein, die als Anschläge dienen, wobei sie am Grund eines die Zuspanneinrichtung aufnehmenden Aufnahmeraumes angeordnet sind, also auf der der Haube gegenüberliegenden Seite.

Die Stützelemente können jedoch auch als separate Teile ausgebildet sein, wobei hierzu nach einem weiteren Gedanken der Erfindung, die Brücke einen Lagerbock aufweist, der einstückig damit verbunden sein kann und der abständig zwei Stützelemente aufweist, zwischen denen der Bremshebel positioniert ist, wobei der Abstand zwischen den Stützelementen so bemessen ist, dass der Bremshebel weitgehend spielfrei einliegt.

Als einstückiger Bestandteil des Bremssattels können Stützelemente an der Haube angeordnet sein, in die der Bremshebel mit dem freien Ende seines Hebelarms ragt und an dem ein pneumatisch oder elektromechanisch betätigbarer Stößel angreift.

Diese Stützelemente sind als Stege an zwei sich gegenüberliegenden Seiten der Haube angeformt und zweckmäßigerweise mechanisch bearbeitet, wozu ein spangebendes Werkzeug entweder durch eine Flanschöffnung führbar ist, an der ein Pneumatikzylinder anschließbar ist und die vom Stößel durchtreten wird, oder durch eine Montageöffnung des Aufnahmeraumes, die nach Montage der Zuspanneinrichtung durch eine Verschlussplatte verschlossen wird.

Da sowohl die Flanschöffnung wie auch die Montageöffnung per se ausreichend groß sind, können diese Öffnungen unverändert zur Einführung des spanenden Werkzeugs genutzt werden.

Als separate Stützelemente können, wie ein weiterer Gedanke vorsieht, Passstifte Verwendung finden, die in den Bremssattel eingepresst sind und beispielsweise bei Einsatz lediglich eines Passstiftes den Bremshebel bzw. den Hebelarm in einer darin vorgesehenen Öffnung durchtritt, wobei auch hier das Querschnittsabmaß der Öffnung an das zugeordnete Querschnittsabmaß des Passstiftes derart angepasst ist, dass eine seitliche Abstützung des Hebelarms gewährleistet ist.

In diesem Sinne können auch zwei parallel und abständig zueinander angeordnete Passstifte in den Bremssattel eingebracht werden, ebenso wie eine Hülse, die in den Flansch, d.h. in die Flanschöffnung eingepresst ist und die in den durch die Haube gebildeten Raum ragt und die mit einem Längsschlitz versehen ist, an deren sich gegenüberliegenden Wänden sich der Hebelarm abstützt.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:

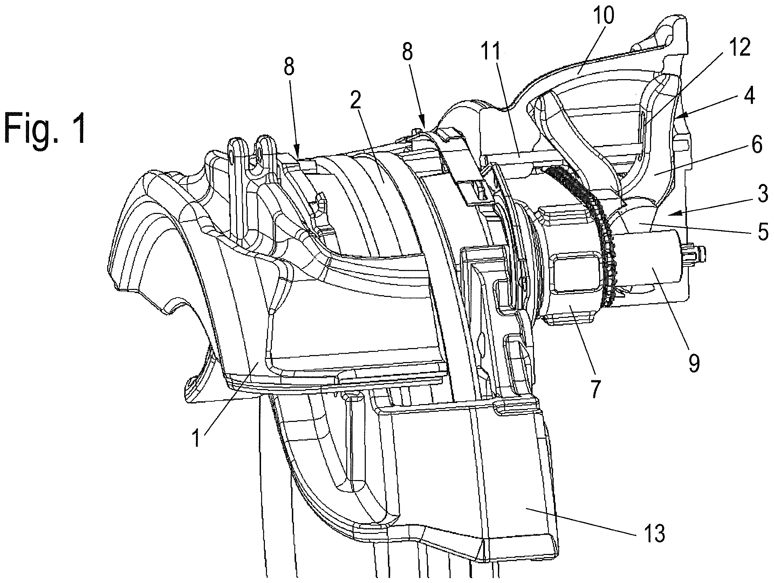

- Figuren 1 - 8: jeweils ein Ausführungsbeispiel der Erfindung in einer perspektivischen Ansicht, wobei die Figuren a) jeweils eine teilweise aufgeschnittene Scheibenbremse und die Figuren b) die Erfindung in einer weitgehend skelettierten Ansicht wiedergeben.

In den Figuren ist eine pneumatisch oder elektromechanisch betätigbare Scheibenbremse für ein Nutzfahrzeug dargestellt, mit einem eine Bremsscheibe 2 übergreifenden Bremssattel 1, beidseitig an die Bremsscheibe 2 anpressbaren Bremsbelägen 8 sowie einem im Bremssattel 1 angeordneten Bremshebel 4 einer Zuspanneinrichtung 3, der am Bremssattel 1 gelagert ist, und lagerseitig als ein um eine Schwenkachse schwenkbarer Exzenter 5 ausgebildet ist, durch den bei einer bremsbedingten Verschwenkung des Bremshebels 4 zwei parallel und abständig zueinander angeordnete, in einer Brücke 7 verstellbar gehaltene Druckstempel 9 gegen den zuspannseitigen Bremsbelag 8 drückbar sind.

Dabei ist der Bremssattel 1, im Beispiel als Schiebesattel, an einem fahrzeugseitigen Bremsträger 13 befestigt, in dem die Bremsbeläge 8 verdrehsicher gehalten sind.

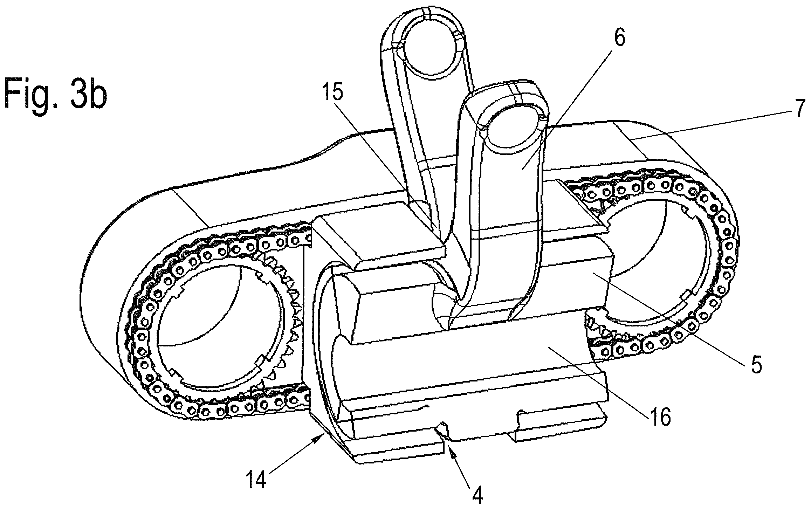

Die Lagerung des Bremshebels 4 im Bremssattel 1 erfolgt über eine nicht dargestellte Lagerwelle, die in einer Lagerstelle 16 des Bremshebels 4 (Figur 3b) einliegt und sich andererseits an einer gleichfalls nicht gezeigten Lagerstelle an einer zugeordneten Wandung des Bremssattels 1 abstützt.

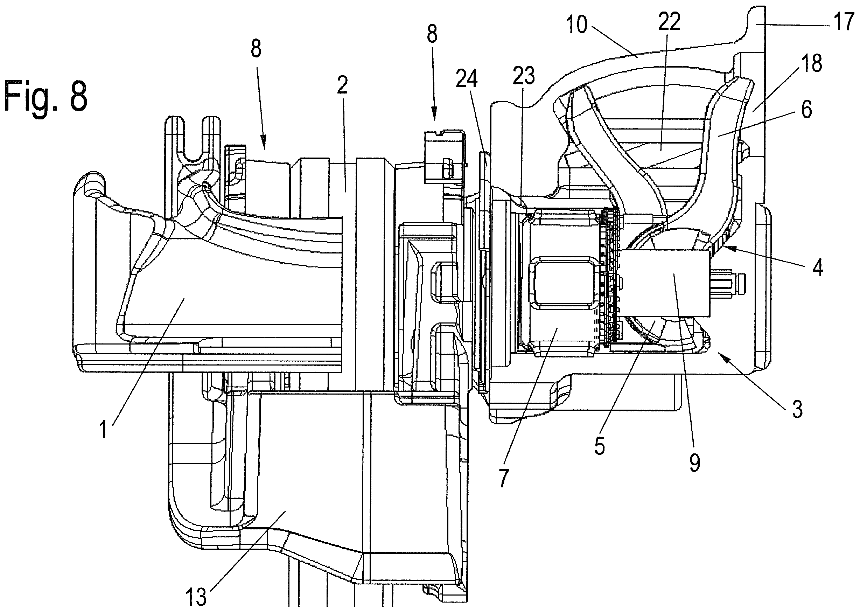

Diese Wandung begrenzt einen Aufnahmeraum des Bremssattels 1, in dem die Zuspanneinrichtung 3 positioniert ist und der gegenüberliegend, der Bremsscheibe 2 zugewandt eine Montageöffnung 23 aufweist, die durch eine Verschlussplatte 24 (Figur 8) verschlossen ist.

Zur Verschiebesicherung quer zur Schwenkrichtung ist der Bremshebel 4 abgestützt, wozu gemäß der Erfindung außerhalb der bremssattelseitigen Lagerung mindestens ein Stützelement vorgesehen ist.

In der Figur 1 ist erkennbar, dass als Stützelement ein Passstift 11 in den Bremssattel 1 eingefügt ist, im Bereich einer angeformten Haube 10, in die das freie Ende eines Hebelarmes 6 des Bremshebels 4 ragt, an den ein Stößel eines Bremszylinders angreift. Der Passstift 11 ist durch einen am Hebelarm 6 vorgesehenen Schlitz 12 geführt und in den Bremssattel 1 eingepresst.

Im Übrigen ist in den Figuren der Hebelarm 6 in zwei Stellungen dargestellt, wobei die linke Position eine Bremsstellung und die rechte eine Nichtbremsstellung wiedergibt.

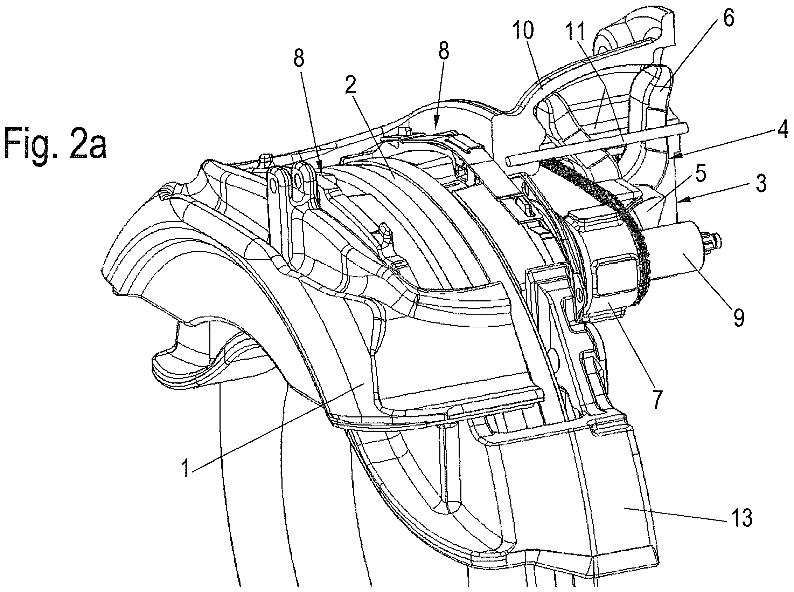

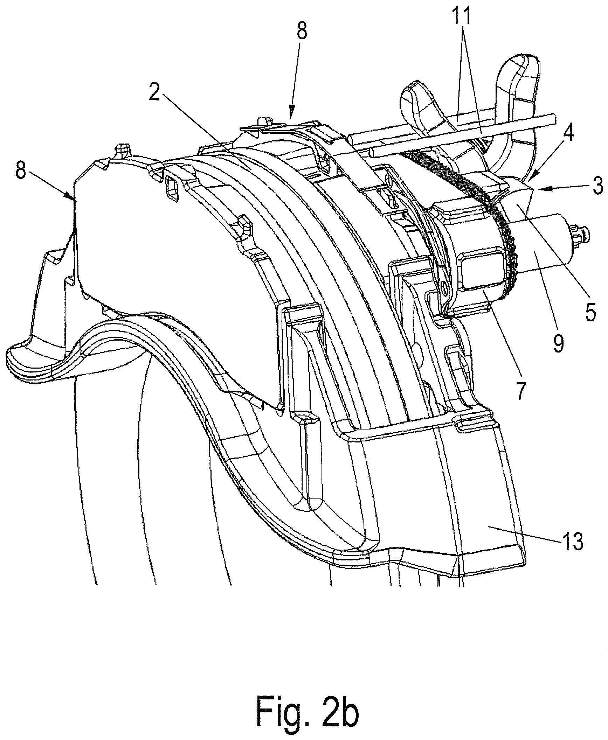

In dem in der Figur 2 gezeigten Beispiel sind zwei Passstifte 11 vorgesehen, die ebenfalls im Bereich der Haube 10 in den Bremssattel 1 eingepresst sind und die jeweils seitlich am Hebelarm 6 anliegen, wobei die Passstifte 11 parallel und abständig zueinander angeordnet sind, wie dies besonders deutlich in der Figur 2 b) zu erkennen ist.

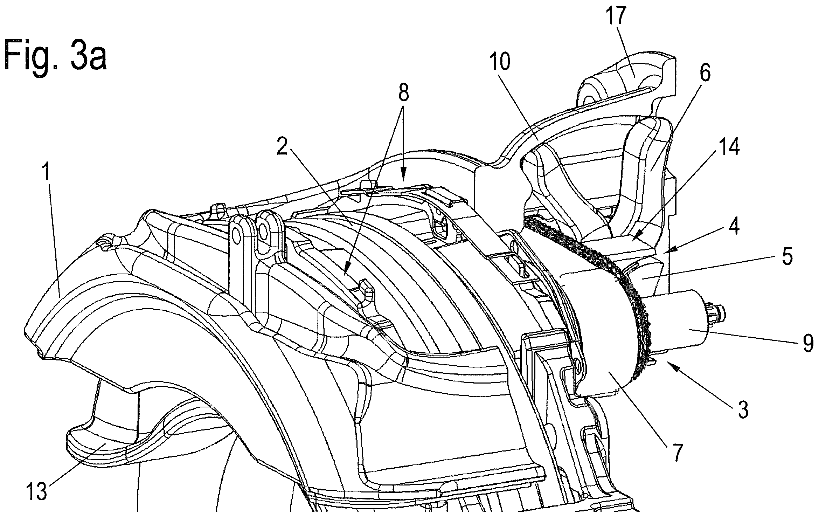

Eine weitere Variante eines Stützelementes ist in der Figur 3 dargestellt. Hierbei ist an der Brücke 7 ein Lagerbock 14 angeschlossen, der mittig eine Nut 15 aufweist, deren Wandungen seitlich am Hebelarm 6 anliegen.

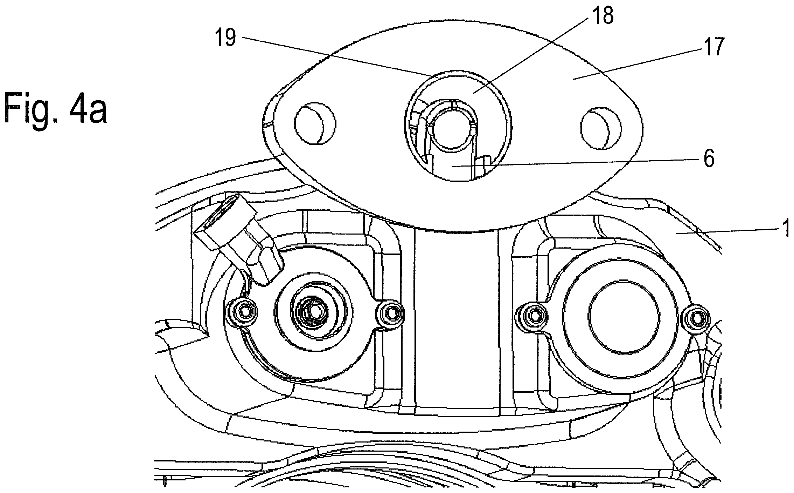

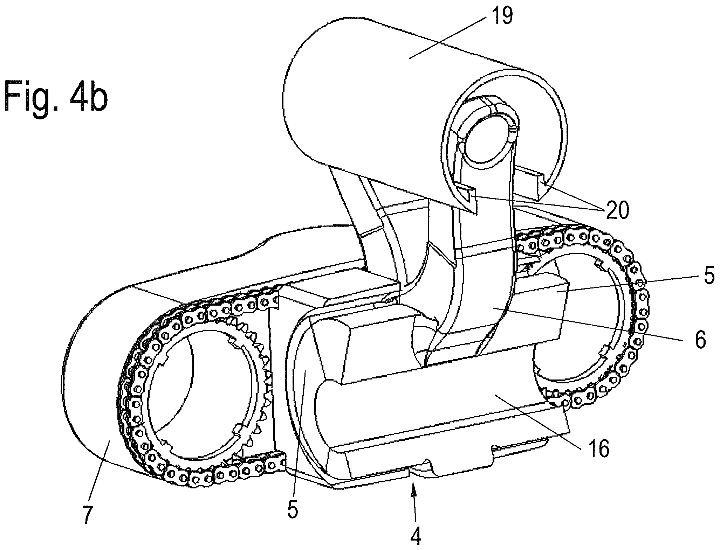

In der Figur 4 ist als Stützelement eine Hülse 19 erkennbar, die in eine Flanschöffnung 18 eines an die Haube 10 angeschlossenen Flansches 17 eingepresst ist. An diesen Flansch 17 ist ein Bremszylinder anschließbar, wobei der genannte Stößel durch die Flanschöffnung 18 geführt ist.

Insbesondere aus der Figur 4b) ist erkennbar, dass die Hülse 19 einen Längsschlitz aufweist, mit parallelen Schlitzbegrenzungen 20, die jeweils als Anlagefläche ausgebildet sind und an denen der Hebelarm 6 mit seinen Seiten anliegt. Dabei erstrecken sich die Schlitzbegrenzungen 20 in Schwenkrichtung des Hebelarms 6.

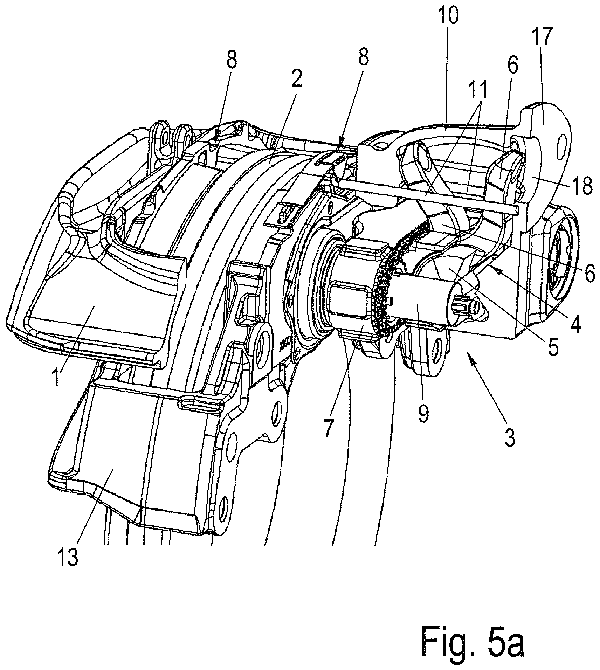

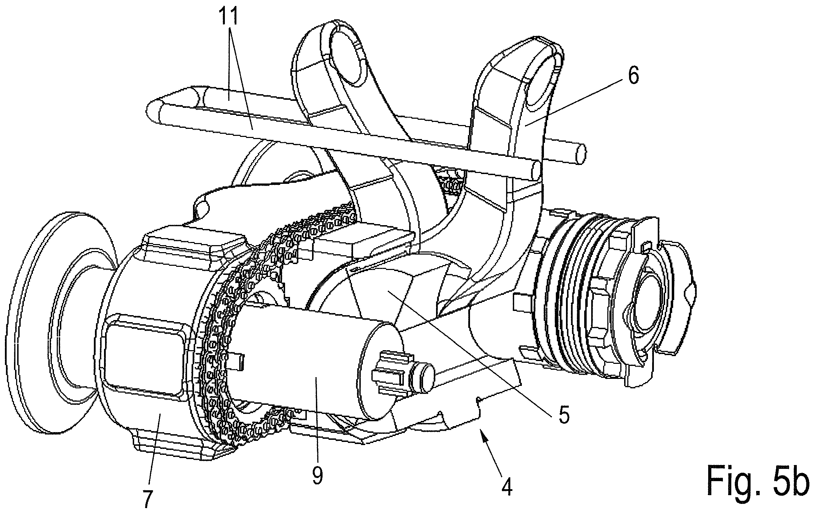

Eine der in der Figur 2 dargestellten Ausführung vergleichbare Variante ist in der Figur 5 gezeigt. Darin sind gleichfalls zwei parallel und abständig zueinander verlaufende Passstifte 11 im Bereich der Haube 10 in den Bremssattel 1 eingepresst, die eine Führung des Bremshebels 4 bzw. des Hebelarms 6 in Schwenkrichtung bilden.

Dabei sind die beiden Passstifte 11 auf ihrer dem zuspannseitigen Bremsbelag 8 zugewandten Seite miteinander verbunden, so dass sich ein U-förmiger Bügel ergibt. Der Verbindungsbereich kann hierbei als Abstützung für einen Belaghaltebügel dienen, der am Bremssattel 1 befestigt ist und der an den beiden Bremsbelägen 8 anliegt.

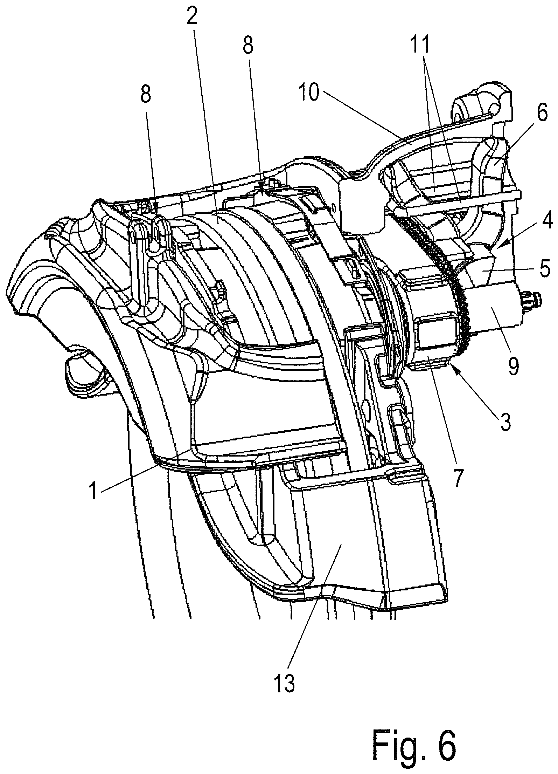

Im Gegensatz zu dieser Ausführung ist zwar das Stützelement nach der Figur 6, ebenfalls als U-förmiger Bügel mit zwei parallel und abständig zueinander angeordneten Passstiften 11 ausgebildet, die zwischen sich den Hebelarm 6 führen, jedoch ist dieses Stützelement mit seinem Verbindungsbereich nicht bis zum zuspannseitigen Bremsbelag 8 geführt, sondern endet in dem durch die Haube 10 gebildeten Raum, womit der Verbindungsbereich als Endanschlag des Hebelarms 6 in Bremsstellung dienen kann.

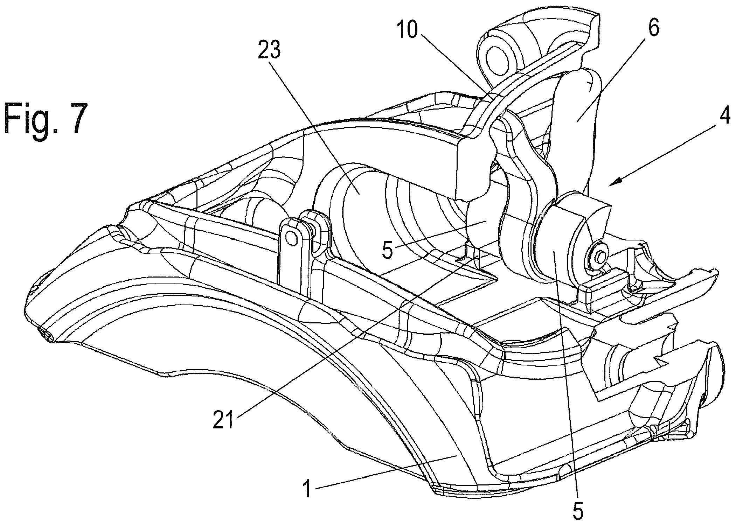

Als Stützelemente sind bei dem in der Figur 7 dargestellten Beispiel im Boden des die Zuspanneinrichtung 3 beherbergenden Aufnahmeraumes des Bremssattels 1 zwei Höcker 21 angeformt, zwischen denen der Bremshebel 4 angeordnet ist, wobei die Höcker 21 an den Stirnseiten der Exzenter 5 anliegen.

Ebenfalls einstückiger Bestandteil des Bremssattels 1 sind die in der Figur 8 erkennbaren Stützelemente, die als Leisten 22 in der Haube 10 vorgesehen sind, wobei von diesen Leisten 22 lediglich eine erkennbar ist, an der der Hebelarm 6 mit einer Seite anliegt.

Die flächige Bearbeitung der Leisten 22 mittels eines spanenden Werkzeugs kann entweder über die Flanschöffnung 18 oder die Montageöffnung 23 erfolgen, die ausreichend groß sind, um ein geeignetes Werkzeug durchführen zu können.

### Bezugszeichenliste

- 1: Bremssattel
- 2: Bremsscheibe
- 3: Zuspanneinrichtung
- 4: Bremshebel
- 5: Exzenter
- 6: Hebelarm
- 7: Brücke
- 8: Bremsbelag
- 9: Druckstempel
- 10: Haube
- 11: Passstift
- 12: Schlitz
- 13: Bremsträger
- 14: Lagerbock
- 15: Nut
- 16: Lagerstelle
- 17: Flansch
- 18: Flanschöffnung
- 19: Hülse
- 20: Schlitzbegrenzung
- 21: Höcker
- 22: Leiste
- 23: Montageöffnung
- 24: Verschlussplatte

## Patentansprüche

1. Pneumatisch oder elektromechanisch betätigbare Scheibenbremse, mit einem eine Bremsscheibe (2) übergreifenden mit einer seitlichen Bearbeitungsöffnung versehenen einstückigen Bremssattel (1), beidseitig an die Bremsscheibe (2) anpressbaren Bremsbelägen (8) sowie einem im Bremssattel (1) angeordneten Bremshebel (4) einer Zuspanneinrichtung (3), der an einer Wandung des Bremssattels (1) gelagert ist und lagerseitig als ein um eine Schwenkachse schwenkbarer Exzenter (5) ausgebildet ist, durch den bei einer bremsbedingten Verschwenkung des Bremshebels (4) zwei parallel und abständig zueinander angeordnete, in einer Brücke (7) verstellbar gehaltene Druckstempel (9) gegen den zuspannseitigen Bremsbelag (8) drückbar sind, wobei der Bremshebel (4) mit einem Hebelarm (6) in einer Haube (10) des Bremssattels (1) ragt und zur Verschiebesicherung seitlich abgestützt ist, **dadurch gekennzeichnet, dass** zur Abstützung des Bremshebels (4) außerhalb der bremssattelseitigen Lagerung mindestens ein Stützelement vorgesehen ist.

2. Scheibenbremse nach Anspruch 1, **dadurch gekennzeichnet, dass** das Stützelement aus einem Passstift (11) besteht, der in den Bremssattel (1) eingepresst ist und an dem der Hebelarm (6) anliegt.

3. Scheibenbremse nach Anspruch 2 **dadurch gekennzeichnet, dass** der Hebelarm (6) einen in Schwenkrichtung offenen Schlitz (12) aufweist, in dem der Passstift (11) geführt ist.

4. Scheibenbremse nach Anspruch 1, **dadurch gekennzeichnet, dass** zwei parallel und abständig zueinander angeordnete Passstifte (11) am Bremssattel (1) gehalten sind, zwischen denen der Hebelarm (6) geführt ist, wobei die Passstifte (11) weitgehend spielfrei an den Seitenflächen des Hebelarms (6) anliegen.

5. Scheibenbremse nach Anspruch 4, **dadurch gekennzeichnet, dass** die Passstifte (11) zu einem U-förmigen Bügel verbunden sind, wobei der Verbindungsbereich auf der dem zuspannseitigen Bremsbelag (8) zugewandten Seite vorgesehen ist.

6. Scheibenbremse nach Anspruch 5, **dadurch gekennzeichnet, dass** der Verbindungsbereich der beiden Passstifte (11) eine Abstützung für einen Belaghaltebügel bildet, der sich an den beiden Bremsbelägen (8) abstützt.

7. Scheibenbremse nach einem der Ansprüche 5 oder 6, **dadurch gekennzeichnet, dass** der Verbindungsbereich der beiden Passstifte (11) einen Endanschlag für den Hebelarm (6) in verschwenkter Endstellung bildet.

8. Scheibenbremse nach Anspruch 1, **dadurch gekennzeichnet, dass** das Stützelement aus einem mit der Brücke (7) verbundenen Lagerbock (14) gebildet ist, der eine Nut (15) aufweist, dessen Seitenflächen eine Führung für den Hebelarm (6) in jeder Schwenkstellung bilden.

9. Scheibenbremse nach Anspruch 1, **dadurch gekennzeichnet, dass** das Stützelement aus einer Hülse (19) besteht, die in eine Flanschöffnung (18) der Haube (10) eingepresst ist, wobei diese Hülse (19) zur Begrenzung eines Schlitzes in Schwenkrichtung des Hebelarms (6) Schlitzbegrenzungen (20) aufweist, an denen der Hebelarm (6) geführt ist.

10. Scheibenbremse Anspruch 1, **dadurch gekennzeichnet, dass** als Stützelemente am Boden eines Aufnahmeraumes des Bremssattels (1), in dem die Zuspanneinrichtung (3) positioniert ist, abständig zueinander angeordnete Höcker (21) angeformt sind, an denen der Exzenter (5) mit seinen beiden Stirnseiten anliegt.

11. Scheibenbremse nach Anspruch 1, **dadurch gekennzeichnet, dass** als Stützelement an den sich gegenüberliegenden Wandungen der Haube (10) Leisten (22) angeformt sind, an denen der Hebelarm (6) mit seinen Seiten anliegt.

## Claims

1. A pneumatically or electromechanically actuatable disc brake having a monobloc brake calliper (1) that fits around a brake disc (2) and is provided with a lateral processing opening, brake pads (8) that can be pressed against either side of the brake disc (2) and a brake lever of a brake-application device (3) that is arranged in the brake calliper (1), mounted on a wall o,f the brake calliper (1) and is designed on the mounting side as a cam (5) that can be pivoted about an axis of pivoting and by means of which two pressure pins (9), which are arranged parallel to and a certain distance from one another and held in a bridge (7) such that they can be adjusted, can be pressed against the action-side brake pad (8) if the brake lever (4) is pivoted by the action of the brake, one lever arm (6) of the brake lever (4) projecting into a cover (10) of the brake calliper (1) and being supported laterally to guard against displacement, **characterised in that** at least one supporting element is provided to support the brake lever (4) outside the brake-calliper-side mounting.

2. A disc brake according to claim 1, **characterised in that** the supporting element consists of a dowel pin (11) that is pressed into the brake calliper (1) and abuts against the lever arm (6).

3. A disc brake according to claim 2, **characterised in that** the lever arm (6) has a slit (12) that is open in the direction of pivoting in which the dowel pin (11) is guided.

4. A disc brake according to claim 1, **characterised in that** held on the brake calliper (1) and arranged in parallel and a certain distance apart are two dowel pins (11) between which the lever arm (6) is guided, the dowel pins (11) abutting against the lateral faces of the lever arm (6) largely without play.

5. A disc brake according to claim 4, **characterised in that** the dowel pins (11) are connected to form a U-shaped bracket, the connecting region being provided on the side facing the action-side brake pad (8).

6. A disc brake according to claim 5, **characterised in that** the connecting region between the two dowel pins (11) forms a support for a pad retaining bracket that rests on both brake pads (8).

7. A disc brake according to either of claims 5 or 6, **characterised in that** the connecting region of the two dowel pins (11) forms an end stop for the lever arm (6) in the pivoted end position.

8. A disc brake according to claim 1, **characterised in that** the supporting element takes the form of a bearing block (14) connected to the bridge (7) and has a groove (15) the lateral sides of which form a guide for the lever arm (6) in each pivot position.

9. A disc brake according to claim 1, **characterised in that** the supporting element consists of a bushing (19) that is pressed into a flange opening (18) of the cover (10), this bushing (19) having slit limiters (20) to limit a slit in the direction of pivoting of the lever arm (6) along which the lever arm (6) is guided.

10. A disc brake according to claim 1, **characterised in that** integrally formed as supporting elements on the floor of a receiving space of the brake calliper (1) in which the brake-application device (3) is positioned are protrusions (21) arranged a certain distance apart against which both front faces of the cam (5) abut.

11. A disc brake according to claim 1, **characterised in that** integrally formed as a supporting element on the opposing walls of the cover (10) are strips (22) against which the sides of the lever arm (6) abut.

## Revendications

1. Frein à disque à actionnement pneumatique ou électromécanique, comprenant un étrier (1) de frein d'une seule pièce, chevauchant un disque (2) de frein et pourvu d'une ouverture latérale d'usinage, des garnitures (8) de frein pouvant être poussées des deux côtés sur le disque (2) de frein, ainsi qu'un levier (4) de frein, monté sur l'étrier (1) de frein, d'un dispositif (3) de serrage, levier (4) de frein qui est monté sur une paroi de l'étrier (1) de frein et qui est constitué, du côté du montage, sous la forme d'un excentrique (5), qui peut pivoter autour d'un axe de pivotement et par lequel, lors d'un pivotement dû au freinage du levier (4) de frein, deux pistons (9) d'application d'une pression, qui sont disposés parallèlement et à distance l'un de l'autre et qui sont maintenus de manière réglable dans un pontet (7), peuvent être poussés sur la garniture (8) de frein du côté du serrage, le levier (4) de frein pénétrant, par un bras (6) de levier, dans un capot (10) de l'étrier (1) de frein et étant appuyé latéralement pour l'empêcher de se déplacer, **caractérisé en ce qu'**au moins un élément d'appui est prévu pour appuyer l'élément (4) de frein à l'extérieur du montage du côté de l'étrier de frein.

2. Frein à disque suivant la revendication 1, **caractérisé en ce que** l'élément d'appui est constitué d'un tenon (11), qui est pressé dans l'étrier (1) de frein et auquel s'applique le bras (6) du levier.

3. Frein à disque suivant la revendication 2, **caractérisé en ce que** le bras (6) du levier a une fente (12) ouverte dans la direction de pivotement, dans laquelle est guidé le tenon (11).

4. Frein à disque suivant la revendication 1, **caractérisé en ce que** deux tenons (11), montés parallèlement et à distance l'un de l'autre, sont maintenus sur l'étrier (1) de frein, tenons entre lesquels le bras (6) du levier est guidé, les tenons (11) s'appliquant dans une grande mesure sans jeu aux faces latérales du bras (6) du levier.

5. Frein à disque suivant la revendication 4, **caractérisé en ce que** les tenons (11) sont reliés en un étrier en forme de U, la partie de liaison étant prévue du côté tourné vers la garniture (8) de frein du côté du serrage.

6. Frein à disque suivant la revendication 5, **caractérisé en ce que** la partie de liaison des deux tenons (11) forme un appui pour un étrier de maintien de garniture, qui s'appuie sur les deux garnitures (8) de frein.

7. Frein à disque suivant l'une des revendications 5 ou 6, **caractérisé en ce que** la partie de liaison des deux tenons (11) forme une butée d'extrémité pour le bras (6) du levier en la position d'extrémité pivotée.

8. Frein à disque suivant la revendication 1, caractérisé en ce l'élément d'appui est formé d'un support (14), qui est relié au pontet (7) et qui a une rainure (15), dont les surfaces latérales forment un guidage du bras (6) du levier dans chaque position de pivotement.

9. Frein à disque suivant la revendication 1, **caractérisé en ce que** l'élément d'appui est constitué d'une douille (19), qui est pressée dans une ouverture (18) de bride du capot (10), cette douille (19) ayant, pour délimiter une fente dans la direction de pivotement du bras (6) du levier, des limitations (20) de fente sur lesquelles le bras (6) du levier est guidé.

10. Frein à disque suivant la revendication 1, **caractérisé en ce que**, comme élément d'appui, viennent de matière sur le fond d'un espace de réception de l'étrier (1) de frein dans lequel est placé le dispositif (3) de serrage, des bossagesi (21), qui sont disposés à distance les uns des autres et sur lesquels l'excentrique (5) s'appuie par ses deux côtés frontaux.

11. Frein à disque suivant la revendication 1, **caractérisé en ce que**, comme élément d'appui, viennent de matière sur les parois opposées du capot (10), des baguettes (22) sur lesquelles le bras (6) du levier s'appuie par ses côtés.
